# EUROPÄISCHE PATENTANMELDUNG

(11) **EP 1 004 858 A1**
(43) Veröffentlichungstag der Anmeldung: **31.05.2000**
(21) Anmeldenummer: 98122614.5
(22) Anmeldetag: 27.11.1998
(51) Int. Cl.: G01F 23/284

(54) **Füllstandsmessgerät**

(71) Anmelder: Endress + Hauser GmbH + Co., 79689 Maulburg (DE)
(72) Erfinder: Lütke, Wolfram Dipl.-Ing., 79594 Inzlingen (DE); Neuhaus, Joachim Dipl.-Phys., 79585 Steinen (DE); Reimelt, Ralf Dipl.-Ing., 79211 Freiburg (DE); Thoren, Werner Dr., 79585 Steinen (DE)
(74) Vertreter: Redding, Anke Dipl.-Phys.

(57) **Zusammenfassung**

Es ist ein Füllstandsmeßgerät zur Messung eines Füllstandes einer Flüssigkeit (1) in einem Behälter (3) vorgesehen, daß bei Flüssigkeiten mit niedrigen Dielektrizitätskonstanten einwandfrei mißt und dessen Installation und Wartung einfach und kostengünstig ist. Dieses umfaßt: eine elektronische Schaltung (13), die im Betrieb elektromagnetische Signale erzeugt, einen Leiter (7), der in den Behälter (3) hinein ragt, entlang dem ein Schwimmer (11, 11a, 11b, 11c, 11d, 11e) mit dem Füllstand mit läuft, der mindestens ein elektromagnetische Signale reflektierendes Teilstuck aufweist, eine Einkopplung (9), die die Signale von der Schaltung (13) auf den Leiter (7) übertragt, welcher Leiter (7) die Signale in den Behälter (3) hinein und ein an dem Schwimmers (11) reflektiertes Signal heraus führt, und eine Empfangs- und Auswerteschaltung (15), die die reflektierten Signale empfängt, die eine Laufzeit der Signale bestimmt und die aus der Laufzeit den Füllstand ermittelt.

## Beschreibung

Die Erfindung betrifft ein Füllstandsmeßgerät zur Messung eines Füllstandes einer Flüssigkeit in einem Behälter bei dem elektromagnetische Signale in Richtung der Füllgutoberfläche gesendet und deren Echo empfangen wird. Es wird eine Laufzeit ermittelt, die ein Signal für den Weg zur Füllgutoberfläche und zurück benötigt und daraus der Füllstand bestimmt.

Mit elektromagnetischen Signalen arbeitendende Füllstandsmeßgeräte sind in einer Vielzahl von Anwendungen, sowohl in der Lagerhaltung als auch in der verarbeitenden Industrie, z.B. in der Chemie, in der Lebensmittelindustrie und in der Ölindustrie, einsetzbar.

Es sind unter anderem mit Mikrowellen arbeitende Füllstandsmeßgeräte im Handel erhältlich. Diese Geräte werden in zwei Klassen unterschieden; eine erste Klasse, bei der die Mikrowellen mittels einer Antenne in Richtung des Füllguts gesendet, an der Füllgutoberfläche reflektiert und anschließend nach einer abstandsabhängigen Laufzeit wieder empfangen werden und eine zweite Klasse, bei der die Mikrowellen entlang eines Wellenleiters in Richtung des Füllguts geführt werden, an der Füllgutoberfläche aufgrund des dort bestehenden Impedanzsprunges reflektiert werden und die reflektierten Wellen entlang des Wellenleiter wieder aus dem Behälter heraus geführt werden.

Als Wellenleiter können dabei sowohl ein einziger als auch zwei oder mehr parallel zueinander angeordnete Leiter dienen, die sich von einem Punkt oberhalb des höchsten zu messenden Füllstandes nach unten in den Behälter hinein erstrecken.

In der DE-U 94 21 870 ist ein Füllstandsmeßgerät zur Messung eines Füllstandes einer Flüssigkeit in einem Behälter angegeben, welches umfaßt
- eine elektronische Schaltung,

-- die im Betrieb elektromagnetische Signale erzeugt,

- einen Leiter,

-- der in den Behälter hinein ragt,

- eine Einkopplung,

-- die die Signale von der Schaltung auf den Leiter überträgt,
--- welcher Leiter die Signale in den Behälter hinein und an einer Oberfläche des Füllguts reflektierte Signale heraus führt, und

- eine Empfangs- und Auswerteschaltung,

-- die reflektierte Signale empfängt,
-- die eine Laufzeit der elektromagnetischen Signale bestimmt und
-- die aus der Laufzeit den Füllstand ermittelt.

Eine elektronische Schaltung zur Erzeugung der elektromagnetischen Signale sowie eine Empfangs- und Auswerteschaltung ist z.B. in der EP-A 780 665 beschrieben.

Bei dem Füllstandsmeßgerät gemäß der DE-U 94 21 870 sind die Signale kurze elektromagnetische Impulse die an der Oberfläche des Füllguts reflektiert werden. Der Anteil der Signale, der reflektiert wird, ist dabei abhängig von der Differenz der Dielektrizitätskonstanten von dem Füllgut und dem oberhalb des Füllgut befindlichen Medium.

Ist Differenz groß, so ist auch der Meßeffekt deutlich und die Laufzeit kann einwandfrei bestimmt werden. Ist die Differenz jedoch gering, so kann die von der Füllgutoberfläche stammende Reflektion nicht mehr ohne weiteres ermittelt werden. In derartigen Anwendungen ist das beschriebene Füllstandsmeßgerät nicht funktionsfähig.

Ein Beispiel für eine solche problematische Anwendung ist die Messung eines Füllstandes in einem ölgefüllten Behälter. Öl hat eine Dielektrizitätskonstante von ca. 2, die typischerweise über dem Öl befindliche Luft eine Dielektrizitätskonstante von 1.

Dieser Effekt tritt auch bei der Füllstandsmessung mittels freier Mirkowellen auf, die in Richtung der Oberfläche des Füllguts gesendet, an der Oberfläche reflektiert und deren Echosignal zur Bestimmung des Füllstands ausgewertet wird.

In der DE-A 44 19 462 ist ein mit Mikrowellen arbeitendes Füllstandsmeßgerät beschrieben, bei dem Mikrowellen in ein in einen Behälter hineinragendes Schwallrohr gesendet werden. Das Schwallrohr dient dabei als Hohlleiter für die Mikrowellen. Es ist angegeben bei Anwendungen, bei denen das Füllgut eine niedrige Dielektrizitätskonstante aufweist, einen Schwimmer mit einer stark reflektierenden Oberfläche in dem Schwallrohr vorzusehen.

Ein Schwallrohr stellt ein großes sperriges und daher unhandliches Bauteil dar und kann daher nicht eingesetzt werden, wenn nur wenig Platz vorhanden ist und/oder eine für ein Füllstandsmeßgerät vorgesehene Öffnung einen zu geringen Durchmesser aufweist. Die Installation eines Schwallrohrs ist aufwendig und teuer. Desweiteren kann, z.B. bei Anwendungen bei denen das Schwallrohr mit zähflüssigen und/oder klebrigen Medien in Berührung steht eine regelmäßige Reinigung erforderlich sein, damit der Schwimmer frei beweglich bleibt.

Es ist eine Aufgabe der Erfindung, ein Füllstandsmeßgerät zur Messung eines Füllstandes einer Flüssigkeit in einem Behälter bei dem elektromagnetische Signale in Richung der Füllgutoberfläche gesendet und deren Echo empfangen wird anzugeben, daß bei Flüssigkeiten mit niedrigen Dielektrizitätskonstanten einwandfrei mißt und dessen Installation und Wartung einfach und kostengünstig ist.

Hierzu besteht die Erfindung in einem Füllstandsmeßgerät zur Messung eines Füllstandes einer Flüssigkeit in einem Behälter, welches umfaßt
- eine elektronische Schaltung,

-- die im Betrieb elektromagnetische Signale erzeugt,

- einen Leiter,

-- der in den Behälter hinein ragt,
-- entlang dem ein Schwimmer mit dem Füllstand mit läuft,
--- der mindestens ein elektromagnetische Signale reflektierendes Teilstück aufweist,

- eine Einkopplung,

-- die die Signale von der Schaltung auf den Leiter überträgt,
--- welcher Leiter die Signale in den Behälter hinein und ein an dem Schwimmer reflektiertes Signal heraus führt, und

- eine Empfangs- und Auswerteschaltung,

-- die das reflektierte Signal empfängt,
-- die eine Laufzeit der elektromagnetischen Signale bestimmt und
-- die aus der Laufzeit den Füllstand ermittelt.

Gemäß einer Ausgestaltung ist der Schwimmer ein Hohlkörper und das elektromagnetische Wellen reflektierende Teilstück ist eine metallische oder metallisch beschichtete Mantelfläche des Hohlkörpers.

Gemäß einer Ausgestaltung ist das Teilstück eine im Innerem des Schwimmers angeordnete elektromagnetische Signale reflektierende Fläche.

Gemäß einer Ausgestaltung ist das Teilstück eine senkrecht zu einer Achse des Leiters verlaufende elektromagnetische Signale reflektierende Fläche.

Gemäß einer Ausgestaltung besteht der Schwimmer aus einem Material mit einer hohen Dielektrizitätskonstanten, das elektromagnetische Wellen reflektiert.

Gemäß einer Ausgestaltung ist an einem von der Einkopplung abgewandten Ende des Leiters eine Halterung vorgesehen, auf der der Schwimmer aufliegt, wenn sich die Flüssigkeitsoberfläche unterhalb der Halterung befindet.

Gemäß einer Ausgestaltung umgibt der Schwimmer einen zylindrischen Abschnitt des Leiters allseitig.

Gemäß einer Ausgestaltung weist das reflektierende Teilstück eine reflektierende Oberfläche auf, die mit der Füllgutoberfläche in einer Ebene liegt.

Ein solches Füllstandsmeßgerät bietet den Vorteil, daß auch bei Flüssigkeiten mit niedrigen Dielektrizitätskonstanten zuverlässige Messungen möglich sind.

Die Erfindung und weitere Vorteile werden nun anhand der Figuren der Zeichnung, in denen sechs Ausführungsbeispiele dargestellt sind, näher erläutert; gleiche Elemente sind in den Figuren mit denselben Bezugszeichen versehen.
- Fig. 1: zeigt eine schematische Darstellung eines ersten Ausführungsbeispiels eines erfindungsgemäßen Füllstandsmeßgeräts in einem Behälter;
- Fig. 2: zeigt ein zweites Ausführungsbeispiel eines Füllstandsmeßgeräts;
- Fig. 3: zeigt ein drittes Ausführungsbeispiel eines Füllstandsmeßgeräts;
- Fig. 4: zeigt ein viertes Ausführungsbeispiel eines Füllstandsmeßgeräts;
- Fig. 5: zeigt ein fünftes Ausführungsbeispiel eines Füllstandsmeßgeräts; und
- Fig. 6: zeigt ein sechstes Ausführungsbeispiel eines Füllstandsmeßgeräts;
- Fig. 7: zeigt eine Elektronik und eine Empfangs- und Auswerteschaltung von Fig. 1; und
- Fig. 8: zeigt Meßsignalverläufe eines Füllstandsmeßgeräts mit und ohne Schwimmer.

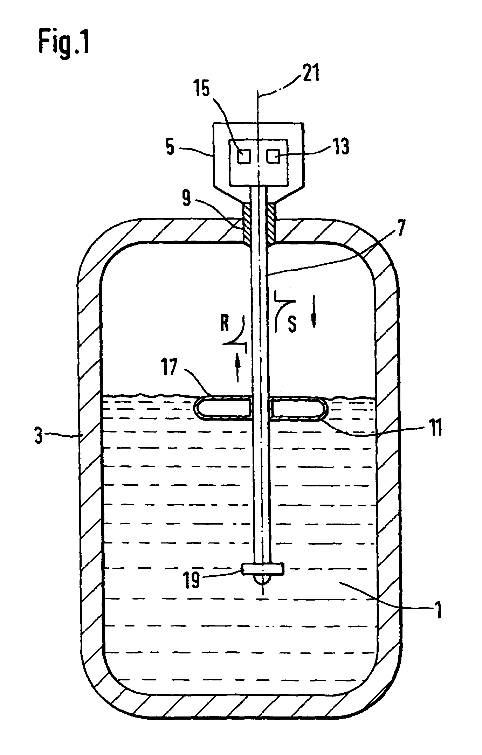

In Fig. 1 ist ein erstes Ausführungsbeispiel eines erfindungsgemäßen Füllstandsmeßgeräts dargestellt. Es dient zur Messung eines Füllstandes einer Flüssigkeit 1 in einem Behälter 3.

Das Füllstandsmeßgerät umfaßt ein außerhalb des Behälters 3 angeordnetes Gehäuse 5 mit dem ein Leiter 7 verbunden ist, der in den Behälter 3 hinein ragt. Es ist eine mit dem Gehäuse 5 verbundene Einkopplung 9 vorgesehen, die, wie in Fig. 1 lediglich schematisch dargestellt ist, in einer Öffnung des Behälters 3 montiert ist. Die Einkopplung 9 kann z.B. ein Außengewinde aufweisen, mittels dessen sie in ein in der Öffnung angeordnetes Innengewinde einschraubbar ist oder sie kann einen Flansch aufweisen, der auf einem die Öffnung umgebenden Gegenflansch befestigbar ist. Andere dem Fachmann bekannt Befestigungsarten sind ebenfalls denkbar.

Der Leiter 7 ist im Inneren der Einkopplung 9 vom Gehäuse 5 in den Behälter 3 hinein geführt. Der Leiter 7 ist z.B. ein mechanisch starrer Stab oder ein mechanisch starrer Draht. Genauso ist aber auch ein gespanntes Seil einsetztbar, dessen eines Ende am Gehäuse 5 oder der Einkopplung 9 und dessen anderes Ende an einem Boden des Behälters befestigt ist. Anstelle einer Befestigung des anderen Endes am Behälterboden kann an dem anderen Ende auch ein Gewicht befestigt sein, durch das das Seil gespannt wird.

Auf dem Leiter 7 ist ein Schwimmer 11 vorgesehen, der auf der Flüssigkeit schwimmt und somit mit dem Füllstand im Behälter 3 mitläuft. Der Füllstand ist in Fig. 1 schematisch durch Wellenlinien dargestellt.

Es ist eine elektronische Schaltung 13 vorgesehen, die im Betrieb elektromagnetische Signale S erzeugt. Diese Signale S werden über die Einkopplung 9 von der Schaltung 13 auf den Leiter 7 übertragen und entlang des Leiters 7 in den Behälter 3 hinein geführt.

Der Schwimmer 11 weist mindestens ein elektromagnetische Signale reflektierendes Teilstück auf, an dem ein Anteil des Signals S reflektiert wird. Ein an dem Schwimmer 11 reflektiertes Signal R wird über den Leiter 7 aus dem Behälter 3 heraus geführt.

Das reflektierte Signal R ist einer Empfangs- und Auswerteschaltung 15 zugeführt, die dieses empfängt, eine Laufzeit des elektromagnetischen Signals S von der Elektronik 13 zum Schwimmer 11 und des reflektierten Signals R vom Schwimmer 11 zur Empfangs- und Auswerteschaltung 15 bestimmt und daraus den Füllstand ermittelt.

Die Ausbreitungsgeschwindigkeit der elektromagnetischen Signale und die Abstände zwischen der Elektronik 13 und dem Behälterboden und zwischen der Empfangs- und Auswerteschaltung 15 und dem Behälterboden sind entweder ohnehin bekannt oder können durch einfache Referenzmessungen erhalten werden. Mit diesen Daten ergibt sich aus der gemessenen Laufzeit die Höhe des reflektierenden Teilstücks des Schwimmers 11 oberhalb des Behälterbodens und damit der Füllstand.

In dem Ausführungsbeispiel von Fig. 1 ist der Schwimmer 11 ein flacher ringsscheibenförmiger Hohlkörper mit einer Mittenbohrung durch die der Leiter 7 hindurch geführt ist. Der Schwimmer 11 umgibt einen zylindrischen Abschnitt des Leiters 7 allseitig. Zwischen dem Schwimmer 11 und dem Leiter 7 besteht ein ringzylindrischer Spalt, so daß der Schwimmer 11 entlang dem Leiter 7 frei beweglich ist.

Das elektromagnetische Wellen reflektierende Teilstück dieses Schwimmers 11 ist eine metallische oder metallisch beschichtete Mantelfläche 17 des Hohlkörpers. Die Mantelfläche 17 ist der Einkopplung 9 zugewandt und verläuft senkrecht zu einer Achse 21 des Leiters 7.

An einem von der Einkopplung 9 abgewandten Ende des Leiters 7 ist eine Halterung 19 vorgesehen, auf der der Schwimmer 11 aufliegt, wenn sich die Flüssigkeitsoberfläche unterhalb der Halterung 19 befindet. Die Halterung 19 ist lediglich schematisch dargestellt und besteht z.B. in einen senkrecht zur Achse 21 des Leiters 7 verlaufenden Bolzen, der z.B. durch den Leiter 7 hindurchgeschraubt ist und zwei Enden aufweist, die mindestens soweit zu beiden Seiten des Leiters 7 hervorstehen, daß der Schwimmer 11 durch die Halterung 19 auf dem Leiter 7 gehalten ist.

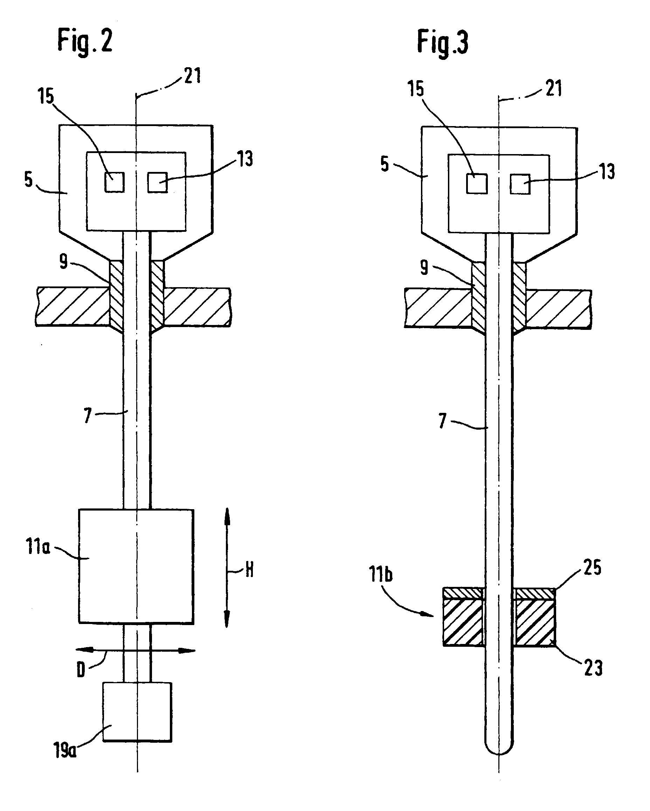

In Fig. 2 ist eine zweites Ausführungsbeispiel eines erfindungsgemäßen Füllstandsmeßgeräts dargestellt. Es unterscheidet sich von dem in Fig. 1 dargestellten Ausführungsbeispiel lediglich darin, daß ein anderer Schwimmer 11a und eine andere Halterung 19a vorgesehen sind. Der Schwimmer 11a ist ein metallischer oder metallisch beschichteter Hohlkörper, der genau wie der in Fig. 1 dargestellte Schwimmer 11 ringzylindrisch ist, der jedoch im Gegensatz zu dem in Fig. 1 dargestellten Schwimmer 11 nicht flach ist, sondern in axialer Richtung eine Höhe H aufweist, deren Abmessung die gleiche Größenordnung aufweist wie ein Außendurchmesser D des Schwimmers 11a.

Die Halterung 19a besteht in einem an das einkopplungs-abgewandte Ende des Leiters 7 angeformten zylindrischen Endstück.

In Fig. 3, 4, 5 und 6 sind weitere Ausführungsbeispiele dargestellt, die sich von den beiden vorangehenden nur durch die jeweilige Ausgestaltung des Schwimmers 11b, 11c, 11d und 11e unterscheiden. Diese Füllstandsmeßgeräte können selbstverständlich ebenfalls mit Halterungen, wie sie bei den Ausführungsbeispielen in den Figuren 1 und 2 dargestellt sind versehen sein.

In dem Ausführungsbeispiel von Fig. 3 weist der Schwimmer 11b einen ringzylindrischen Hohlkörper 23 aus einem Kunststoff, z.B. aus Polytetraflourethylen (PTFE), auf. Die elektromagnetische Signale reflektierende Teilfläche ist eine auf einer einkopplungs-zugewandten Stirnfläche des Hohlkörpers 23 angeordnete ringscheibenförmige Metallplatte 25. Dieses Ausführungsbeispiel weist den Vorteil auf, daß eine ringscheibenförmige Metallplatte lose auf einem einfachen Schwimmer aufliegen kann. Dies ist kostengünstig und die Montage ist einfach und erfordert daher nur einen geringen Aufwand.

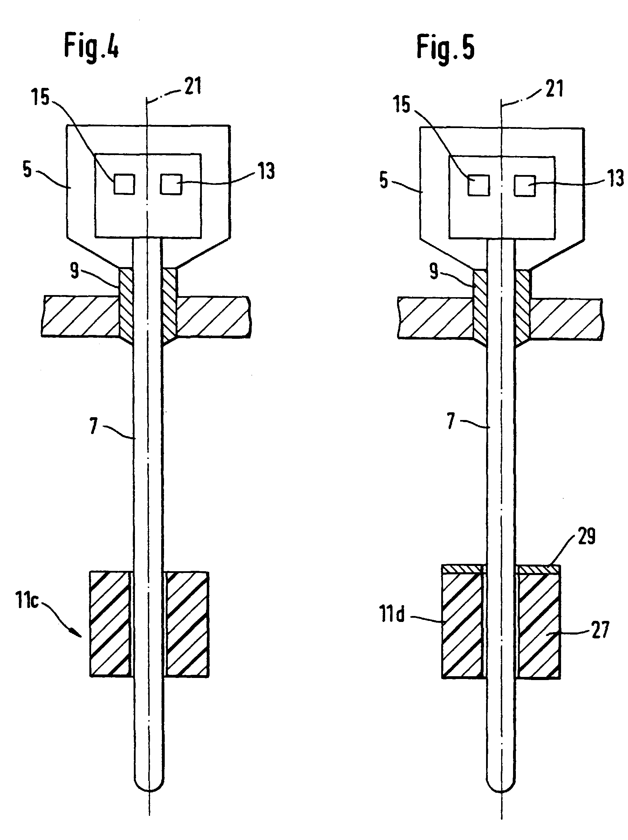

In dem Ausführungsbeispiel von Fig. 4 ist der Schwimmer 11c ein massiver Ringzylinder, der aus einem Material mit einer hohen Dielektrizitätskonstanten besteht, das elektromagnetische Wellen reflektiert. Unter einer hohen Dielektrizitätskonstante ist eine Dielektrizitätskonstante zu verstehen, deren Wert deutlich größer ist als der Wert der Dielektrizitätskonstanten von einem über dem Füllgut befindlichen Medium. Typischerweise befindet sich oberhalb des Füllguts Luft mit einer Dielektrizitätskonstanten von 1. In Verbindung mit Luft wäre ein Material mit einer Dielektrizitätskonstanten größer 3 ausreichend um einen ausreichend hohen Reflektionskoeffizienten zu erhalten.

Derartige Schwimmer weisen den Vorteil auf, daß sie homogene Körper sind. Da keinerlei Verbindungen benötigt werden ist die Fertigung solcher Schwimmer sehr einfach.

Bei Anwendungen bei denen z.B. aus Gründen der mechanischen und/oder chemischen Beständigkeit ein massiver Schwimmer aus einem Werkstoff mit einer niedrigeren Dielektrizitätskonstanten verwendet werden soll, kann, wie in Fig. 5 dargestellt, ein Schwimmer 11d vorgesehen werden, der einen massiven Grundkörper 27 aufweist, auf dessen einkopplungs-zugewandter Stirnfläche eine dünne elektromagnetische Signale stark reflektierende Schicht 29, z.B. eine metallische Beschichtung, eine dünne Metallplatte oder eine leitfähige Kunststoffschicht, aufgebracht ist.

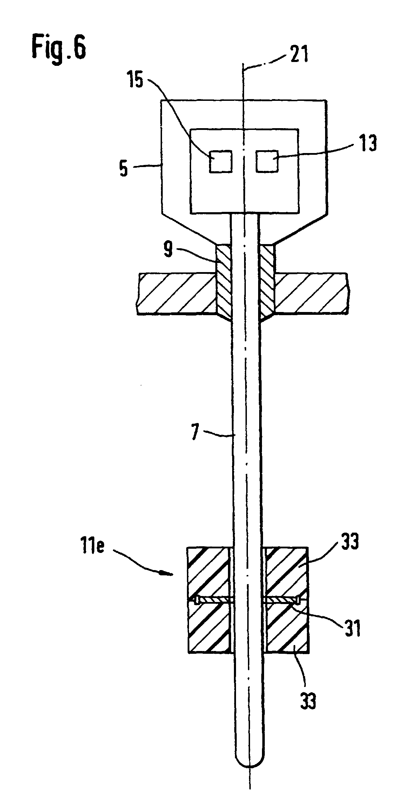

Fig. 6 zeigt ein weiteres Ausführungsbeispiel mit einem Schwimmer 11e, bei dem eine elektromagnetische Signale reflektierende Schicht 31 zwischen zwei Teilkörpern 33 des Schwimmers 11e angeordnet ist. Die Teilkörper 33 können sowohl masive Elemente als auch Hohlkörper sein. Die Schicht 31 ist z.B. eine metallische Beschichtung eines der Teilkörper, eine Metallscheibe oder eine Schicht aus einem leitfähigen Kunststoff.
Vorzugsweise ist die Schicht 31 gänzlich im Innerem des Schwimmers 11e angeordnet.

Dies bietet den Vorteil, daß das elektromagnetische Signale reflektierende Teilstück, hier die Scheibe 31, nicht mit dem Füllgut in Berührung kommt. Es besteht damit praktisch keine Gefahr von Korrosion. Das Teilstück kann daher aus einem einfachen und billigen Material hergestellt sein.

Vorzugsweise sind die Materialien und die Abmessungen der einzelnen Komponenten der Schwimmer 11, 11a, 11b, 11c, 11d, 11e im Hinblick auf die spezifische Dichte des Füllguts so ausgewählt, daß jeweils die reflektierenden Teilstücke eine reflektierende Fläche aufweisen, die mit der Füllgutoberfläche in einer Ebene liegt und senkrecht zur Achse 21 des Leiters 7 verlaufen.

Bei dem Schwimmer 11 von Fig. 1 ist dies die Mantelfläche 17, bei dem Schwimmer 11a von Fig. 2 ist dies eine ringscheibenförmige einkopplungs-zugewandte Stirnfläche des Hohlkörpers, bei dem Schwimmer 11b von Fig. 3 ist dies die Metallplatte 25, bei dem Schwimmer 11c von Fig. 4 ist dies eine ringscheibenförmige einkoppllungs-zugewandte Stirnfläche des Schwimmers 11c, bei dem Schwimmer 11d von Fig. 5 ist dies die Schicht 29 und bei dem dem Schwimmer 11e von Fig. 6 ist dies die reflektierende Schicht 31.

Wenn die reflektierenden Teilstücke eine reflektierende Fläche aufweisen, die mit der Füllgutoberfläche in einer Ebene liegt, so ergibt die Laufzeitmessung direkt den korrekten Füllstand. Andernfalls müßte der Abstand zwischen Füllgutoberfläche und Reflektionsebene bestimmt und die Laufzeitmessung bzw. der gemessene Füllstand entsprechend korrigiert werden.

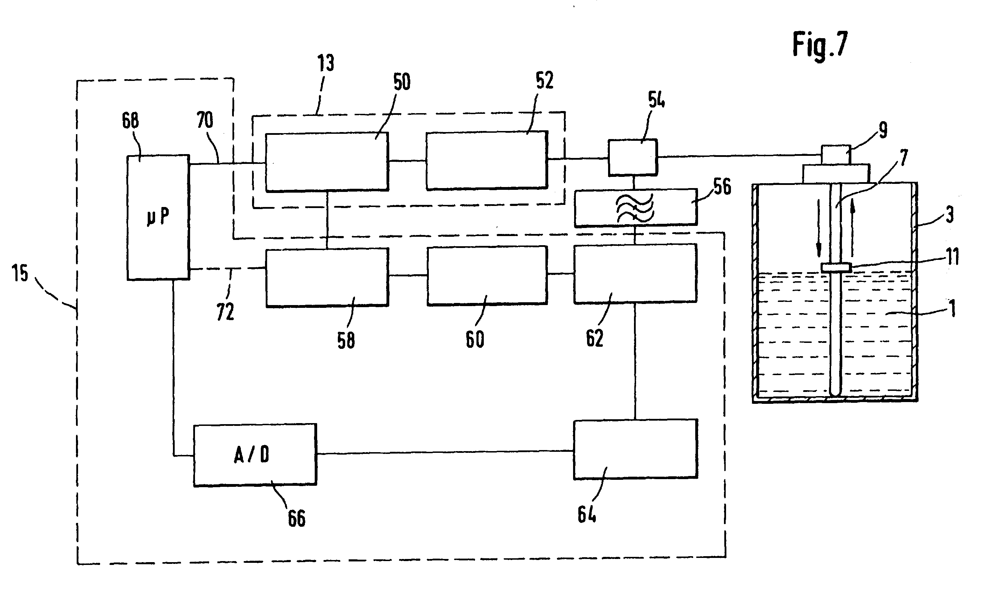

Fig. 7 zeigt ein Ausführungsbeispiel eines Blockschaltbilds der elektronischen Schaltung 13 und der Empfangs- und Auswerteschaltung 15.

Die elektronische Schaltung 13 weist einen Sendetaktgeber 50 und einen Sendeimpulsgenerator 52 auf. Ein Sendetakt des Sendetaktgebers 50 ist dem Sendeimpulsgenerator 52 zugeführt ist. Vorzugsweise wird ein Sendeimpulsgenerator 52 verwendet, der elektromagnetische Signale erzeugt, die die Form von niederenergetischen hochfrequenten kurzen Pulsen haben. Derartige Sendeimpulsgeneratoren sowie in Verbindung damit verwendbare elektronische Schaltungen und Empfangs-und Auswerteschaltungen sind z.B. in der US-A 5,345,471 und der US-A 5,361,070 beschrieben. Es sind Pulse mit einer Spitzenleitung von weniger als 1 µW und einer effektiven Leistung 1 nW oder weniger mit Frequenzen von 100 MHz und mehr erzeugbar. Die Sendetaktrate beträgt z.B. einige MHz.

Die elektromagnetischen Signale werden über die Einkopplung 9 dem Leiter 7 zugeführt. Umgekehrt gelangen entlang des Leiters 7 reflektierte Signale über den Leiter 7, die Einkopplung 9, den Richtkoppler 54 und einen dem Richtkoppler 54 nachgeschalteten Hochpaß 56 zur Empfangs- und Auswerteschaltung 15.

Die Empfangs- und Auswerteschaltung 15 umfaßt eine Zeitverzögerung 58, an deren Eingang der Sendetakt des Sendetaktgenerators 50 anliegt und die einen Abtasttakt erzeugt, der dem um eine variable Verzögerungszeit verzögerten Sendetakt entspricht. Die variable Verzögerungszeit wird z.B. mittels eines Sägezahngenerators bereitgestellt. Der Abtasttakt ist einem Abtastimpulsgenerator 60 zugeführt, der in Abhängigkeit vom Abtasttakt Abtastimpulse generiert und einem ersten Eingang einer Abtast- und Halte Schaltung 62 zuführt. Abtast- und Sendeimpulsgenerator 52, 60 sind vorzugsweise identisch, so daß sich die von ihnen erzeugten elektromagnetischen Signale lediglich um die variable Verzögerungszeit unterscheiden.

Die reflektierten Signale liegen über den Richtkoppler 54 und den Hochpaß 56 an einem zweiten Eingang der Abtast- und Halteschaltung 62 an.

Im Betrieb werden vorzugsweise periodisch mit der Sendetaktfrequenz kurze Sendepulse erzeugt und die reflektierten Echosignale der Abtast- und Halteschaltung 62 zugeführt. Dort wird jedem Echosignal ein Abtastimpuls überlagert und ein daraus resultiertendes Gesamtsignal aufgenommen, mittels eines nachgeschalteten Verstärkers 64 verstärkt, mittels eines in Serie zu dem Verstärker 64 angeordneten Analog-Digital-Wandler 66 digitalisiert und einem Mikroprozessor 68 als Abtastwert zugeführt.

Das Gesamtsignal ist ein Maß für die Übereinstimmung von Echosignal und Abtastimpuls. Die Echosignale treffen periodisch ein und aufeinanderfolgende Abtastimpulse unterscheiden sich voneinander durch die gemäß einer Sägezahnfunktion verlaufende Zeitverzögerung. Unter der Voraussetzung, daß sich aufeinanderfolgende Echosignal nicht wesentlich unterscheiden, liefert die Abtast- und Halteschaltung 62 eine stroboskopische Aufzeichnung der Echosignale. Diese Voraussetzung ist typischerweise immer erfüllt, da sich der Füllstand in dem Zeitraum zwischen zwei Sendepulsen praktisch nicht ändert.

Der Mikroprozessor 68 ist über eine erste Leitung 70 mit dem Sendetaktgenerators 50 und über eine zweite Leitung 72 mit dem Abtasttaktgenerator 58 verbunden. Im Betrieb startet der Mikroprozessor 68 regelmäßig Meßzyklen. Während eines Meßzyklusses werden die elektromagnetischen Signale wie zuvor beschrieben periodisch erzeugt und die reflektierten Signale abgetastet. Ein Meßzyklus endet wenn alle gemäß der Sägezahnfunktion vorgesehenen Zeitverzögerungen durchlaufen wurden. Es werden die einzelnen Abtastwerte jeweils in Verbindung mit der zugeordneten momentanen Verzögerung aufgezeichnet. Dies ergibt einen Meßsignalverlauf aus dem die Laufzeit bestimmbar ist.

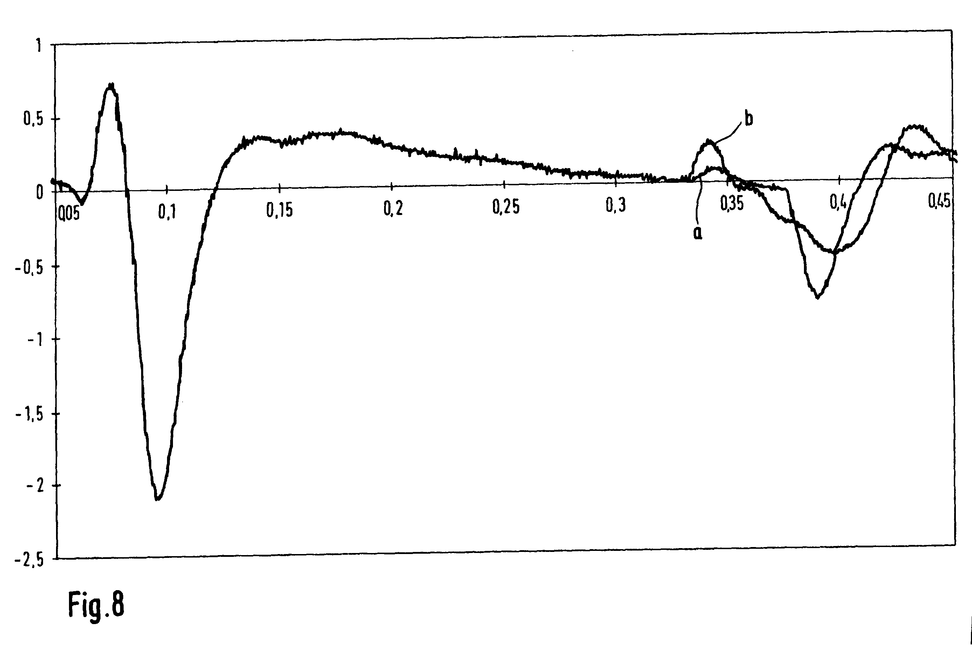

In Fig. 8 sind zwei Meßsignalverläufe dargestellt von denen ein erster mit a gekennzeichneter Meßsignalverlauf mit einem Füllstandsmeßgerät ohne Schwimmer und ein zweiter mit b gekennzeichneter Meßsignalverlauf mit einem Füllstandsmeßgerät mit einem Schwimmer aus Polytetraflourethylen (PTFE), der eine einkopplungs-zugewandte mit Alumiumfolie beschichtete Stirnfläche aufweist, aufgezeichnet wurde. Beide Messungen erfolgten mit einem Füllgut mit niedriger Dielektrizitätskonstante. Es sind jeweils die normierten Abtastwerte gegen die Verzögerungszeit aufgezeichnet.

Bei kleinen Verzögerungszeiten sind die Meßsignalverläufe a und b identisch. Das erste Maximum der beiden Meßsignalverläufe a und b ist durch Reflektionen im Bereich der Einkopplung 9, wo zwangsläufig Impedanzsprünge auftreten, bedingt. Das zweite Maximum des Meßsignalverlaufs a ist auf eine Reflektion an der Füllgutoberfläche zurückzuführen, das zweite Maximum des Meßsignalverlaufs b ist auf eine Reflektion am Schwimmer zurückzuführen.

Die Amplitude des zweiten Maximums des Meßsignalverlaufs b ist ca. dreimal so groß wie die des zweiten Maximums des Meßsignalverlaufs a und die Breite des Reflektionspeaks ist beim Meßsignalverlauf b deutlich geringer als beim Meßsignalverlauf a.

Die Genauigkeit mit der der Füllstand bestimmbar ist, hängt wesentlich davon ab, wie genau die Lage des zweiten Maximums ermittelt werden kann. Die Genauigkeit ist umso größer, je größer die Amplitude des Maximums ist und umso geringer die Breite des zugehörigen Reflektionspeaks ist.

Wie Fig. 8 eindeutig zeigt, kann die Meßgenauigkeit durch die erfindungsgemäße Verwendung eines Schwimmers bei Füllgütern mit niedrigen Dielektrizitätskonstanten deutlich verbessert werden.

## Patentansprüche

1. Füllstandsmeßgerät zur Messung eines Füllstandes einer Flüssigkeit (1) in einem Behälter (3), welches umfaßt
- eine elektronische Schaltung (13),
-- die im Betrieb elektromagnetische Signale erzeugt,
- einen Leiter (7),
-- der in den Behälter (3) hinein ragt,
-- entlang dem ein Schwimmer (11, 11a, 11b, 11c, 11d, 11e) mit dem Füllstand mit läuft,
--- der mindestens ein elektromagnetische Signale reflektierendes Teilstück aufweist,
- eine Einkopplung (9),
-- die die Signale von der Schaltung (13) auf den Leiter (7) überträgt,
--- welcher Leiter (7) die Signale in den Behälter (3) hinein und ein an dem Schwimmers (11) reflektiertes Signal heraus führt, und
- eine Empfangs- und Auswerteschaltung (15),
-- die die reflektierten Signale empfängt,
-- die eine Laufzeit der Signale bestimmt und
-- die aus der Laufzeit den Füllstand ermittelt.

2. Füllstandsmeßgerät nach Anspruch 1, bei dem der Schwimmer (11) ein Hohlkörper und das elektromagnetische Wellen reflektierende Teilstück eine metallische oder metallisch beschichtete Mantelfläche (17) des Hohlkorpers ist.

3. Füllstandsmeßgerät nach Anspruch 1, bei dem das Teilstück eine im Innerem des Schwimmers (11e) angeordnete elektromagnetische Signale reflektierende Fläche ist.

4. Füllstandsmeßgerät nach Anspruch 1, bei dem das Teilstück eine senkrecht zu einer Achse (21) des Leiters (7) verlaufende elektromagnetische Signale reflektierende Fläche ist.

5. Füllstandsmeßgerät nach Anspruch 1, bei dem der Schwimmer (11c) aus einem Material mit einer hohen Dielektrizitätskonstanten besteht, das elektromagnetische Wellen reflektiert.

6. Füllstandsmeßgerät nach Anspruch 1, bei dem an einem von der Einkopplung (9) abgewandten Ende des Leiters (7) eine Halterung (19, 19a) vorgesehen ist, auf der der Schwimmer (11, 11a)aufliegt, wenn sich die Flüssigkeitsoberfläche unterhalb der Halterung (19, 19a) befindet.

7. Füllstandsmeßgerät nach Anspruch 1, bei dem der Schwimmer (11, 11a, 11b, 11c, 11d, 11e) einen zylindrischen Abschnitt des Leiters (7) allseitig umgibt.

8. Füllstandsmeßgerät nach einem der vorangehenden Ansprüche, bei dem das reflektierende Teilstück eine reflektierende Oberfläche aufweist, die mit der Füllgutoberfläche in einer Ebene liegt.
